# EUROPÄISCHE PATENTSCHRIFT

(11) **EP 1 259 741 B1**
(45) Veröffentlichungstag und Bekanntmachung des Hinweises auf die Patenterteilung: **25.05.2005**
(21) Anmeldenummer: 01902354.8
(22) Anmeldetag: 26.01.2001
(51) Int. Cl.: F16C 19/54

(54) **RADIAL-AXIAL-WÄLZLAGER**
RADIAL-AXIAL ROLLER BEARING
PALIER A ROULEMENT RADIAL AXIAL

(30) Priorität: 02.03.2000 DE 10010295
(43) Veröffentlichungstag der Anmeldung: 27.11.2002
(73) Patentinhaber: INA-Schaeffler KG, 91074 Herzogenaurach (DE)
(72) Erfinder: DITTENHÖFER, Thomas, 97519 Riedbach (DE)
(86) Internationale Anmeldenummer: PCT/EP2001/000849
(87) Internationale Veröffentlichungsnummer: WO 2001/065131

(56) Entgegenhaltungen:
- DE-A- 3 115 780
- DE-A- 3 620 102
- DE-A- 3 727 543
- DE-U- 9 214 796
- FR-A- 2 537 676
- GB-A- 1 274 164
- US-A- 3 652 141
- US-A- 3 967 867

## Beschreibung

### Anwendungsgebiet der Erfindung

Die Erfindung betrifft ein Radial-Axial-Wälzlager, mit einem Innenring, zu dem koaxial ein Außenring angeordnet ist, zwischen denen zur Aufnahme von radialen Kräften Wälzkörper abrollen und mit beidseitig zur Aufnahme von axialen Kräften angeordneten, in Käfigen aufgenommenen zylindrischen Wälzkörpern, deren Laufbahnen einerseits von den Stirnflächen des Außenringes und andererseits von je einer Laufscheibe gebildet sind.

### Hintergrund der Erfindung

Ein solch kombiniertes Radial-Axial-Wälzlager ist auf Seite 136 des INA-Kataloges Wälzlager 305 dargestellt. Es besteht aus einem Innenring, einem koaxial dazu angeordneten Außenring und dazwischen auf zugehörigen Laufbahnen abwälzenden Zylinderrollen. Die Stirnseiten des Außenringes bilden gleichzeitig Laufbahnen für rechts- und linksseitig angeordnete Axiallager, deren andere Laufbahn durch je eine Laufscheibe gebildet sind. Der Innenring des Radiallagers ist einstückig mit einer Laufscheibe eines Axiallagers verbunden, d. h. dieses aus Innenring und Laufscheibe zusammengesetzte Teil ist L-förmig gestaltet. Die Trennebene zwischen diesem L-förmigen Bauteil und der anderen Laufscheibe ist so gelegt, dass sie außerhalb des Radiallagers gelegt ist. Diese liegt in der verlängerten Radialebene der Lauffläche eines Axiallagers.

Nachteilig dabei ist, dass eine solch kombinierte Lageranordnung aufgrund der nicht mit dem Innenring verbundenen einen Laufscheibe insbesondere bei hohen Belastungen relativ weich, d. h. nicht kippsteif ist. Ein weiterer Nachteil ist darin zu sehen, dass aufgrund der unterschiedlich geformten Lagerbestandteile deren Fertigung relativ aufwendig und damit teuer ist.

### Zusammenfassung der Erfindung

Der Erfindung liegt daher die Aufgabe zu Grunde, eine aus der US-A-3 652 141 bekannte Radial-Axial-Wälzlagerbaueinheit so weiterzu entwickeln, daß sie sich kostengünstig fertigen lässt.

Erfindungsgemäß wird diese Aufgabe nach dem kennzeichnenden Teil von Anspruch 1 dadurch gelöst, dass der Innenring aus zwei Teilringen gebildet ist, die einstückig mit den Laufscheiben verbunden sind, wobei eine Trennebene zwischen den Teilringen in den Laufbahnbereich des Radiallagers gelegt ist.

Der Vorteil der erfindungsgemäßen Lösung liegt insbesondere darin, daß die beiden L-förmigen Teilringe durch die Lage ihrer Trennebene zueinander im Laufbahnbereich des Radiallagers durch dessen Wälzkörper zentriert sind. Dies bedeutet, durch die Anlage der als Zylinderrollen ausgebildeten Wälzkörper des Radiallagers an beiden L-förmigen Teilringen wird ein radialer Versatz zwischen beiden ausgeschlossen.

Vorteilhafte Weiterbildungen der Erfindungen sind in den Unteransprüchen 2 bis 9 beschrieben.

So ist nach Anspruch 2 vorgesehen, dass die Trennebene in das Zentrum des Laufbahnbereiches des Radiallagers gelegt ist. Diese Zentrumslage ermöglicht eine spiegelbildliche Fertigung der beiden Teilringe, wobei es zur Zentrierung der beiden Teilringe auch ausreicht, wenn die Trennebene zwischen beiden nicht unbedingt im Zentrum der Wälzkörper des Radiallagers gelegt ist, sondem außerhalb.

Nach Anspruch 3 ist vorgesehen, dass der Innenring zunächst als ein einstükkiges Bauteil bearbeitet und nach seiner Fertigung in die beiden Teilringe gesprengt ist. Diese Fertigungsart ist besonders vorteilhaft, da anderenfalls bei der Bearbeitung als einzelner Teilring unterschiedliche Toleranzen in Laufbahnen und Bohrungen auftreten.

Nach einem weiteren Merkmal der Erfindung geht aus Anspruch 4 hervor, dass die Teilringe durch Befestigungsschrauben aneinander gehalten sind, wobei sich die Anzahl der Befestigungsschrauben nach den axial wirkenden Kräften richtet.

Nach einem zusätzlichen Merkmal der Erfindung gemäß Anspruch 5 ist vorgesehen, dass die zylindrischen Wälzkörper der Axiallager durch je einen Bord geführt sind, der entweder am Außenring oder an den Laufscheiben angeordnet ist. Der Vorteil dieser Lösungsvariante liegt darin, dass der Bord nunmehr die Führung der Wälzkörper des Axiallagers übernimmt. Auf diese Weise werden Gleitanteile in der Reibung reduziert, weil durch den Bord eine bessere Führung erfolgt, d. h. die Reibung von Zylinderrollen an den Käfigstegen entfällt.

In diesem Fall kann es zweckmäßig sein, wenn der Käfig nicht als Ganzes, sondern nach Anspruch 6 aus einzelnen, je einen zylindrischen Wälzkörper aufnehmenden, in Umfangsrichtung aneinander stoßenden Segmenten zusammengesetzt ist. Vorteilhafterweise sind dabei nach Anspruch 7 die Segmente so gestaltet, dass sie wenigstens in einem Teilbereich ihrer radialen Ausdehnung je eine in Umfangsrichtung gegenüberliegende bogenförmige Begrenzungslinie derart aufweisen, dass ein Berührungspunkt zwischen zwei benachbarten Segmenten gebildet ist, der im Bereich zwischen Teilkreislinie und Bord angeordnet ist. Auf diese Weise wird eine möglichst geringe Reibung zwischen den benachbarten Segmenten realisiert. Nach Anspruch 8 ist es auch möglich, dass zwischen benachbarten Segmenten ein Federmittel angeordnet ist. Schließlich geht aus Anspruch 9 hervor, dass die Segmente an ihrer radial innenliegenden Seite zwei in Umfangsrichtung voneinander beabstandete Erhebungen aufweisen sollen. Durch Anlage dieser Erhebungen am Innenring wird eine grobe Ausrichtung des Axiallagers erreicht, während dessen Feinausrichtung durch die Anlage der Wälzkörper am Bord gegeben ist.

Die Erfindung wird an nachstehenden Ausführungsbeispielen näher erläutert.

### Kurze Beschreibung der Zeichnungen

Es zeigen:
- Figur 1: einen Längsschnitt durch eine erfindungsgemäße Radial-Axial-Lagereinheit,
- Figur 2: einen teilweisen Längsschnitt durch eine andere Variante einer erfindungsgemäßen Lagereinheit,
- Figur 3: eine vergrößerte Darstellung einer Einzelheit gemäß Figur 2 und
- Figur 4: einen Ausschnitt aus einer Draufsicht auf einzelne Käfigsegmente.

### Ausführliche Beschreibung der Zeichnungen

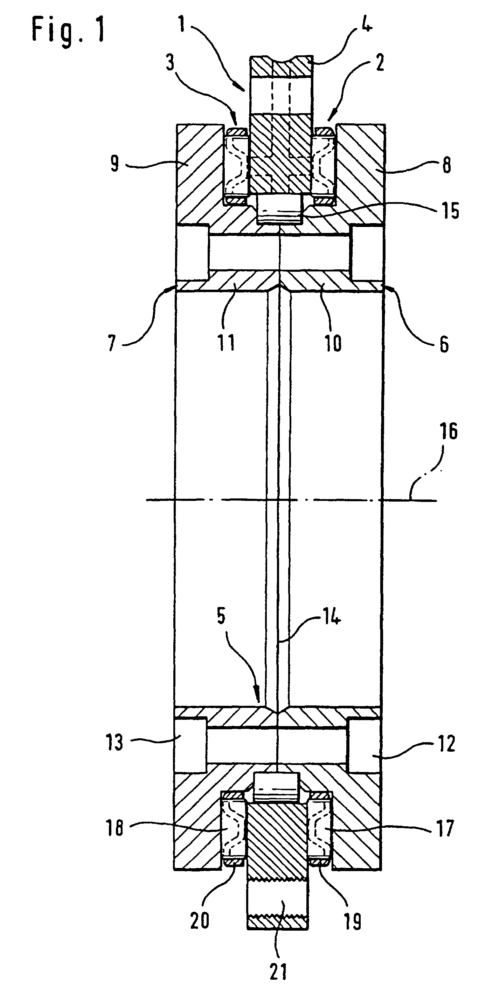

Die in Figur 1 dargestellte Radial-Axial-Wälzlagereinheit besteht aus dem Radiallager 1 und den beiden rechts und links daneben angeordneten Axiallagern 2 und 3. Das Radiallager 1 weist den mit Befestigungsbohrungen 21 versehenen Außenring 4 und den Innenring 5 auf, die koaxial voneinander beabstandet sind, so dass zwischen ihnen Zylinderrollen 15 abwälzen. Der Innenring 5 ist aus den beiden Teilringen 6 und 7 zusammengesetzt, die wiederum aus dem axial verlaufenden Teil 10 und 11 sowie den beiden Laufscheiben 8 und 9 der Axiallager 2 und 3 bestehen. Die Teilringe 6 und 7 weisen eine L-förmige Gestalt auf und liegen mit ihren axial verlaufenden Teilen 10 und 11 an der Trennebene 14 aneinander. Diese Trennebene 14 liegt im Zentrum der Innenlaufbahn der Zylinderrollen 15, so dass die beiden Teilringe 6 und 7 durch die Zylinderrollen 15 zentriert sind, d. h. es kann kein radialer Versatz zwischen den beiden axial verlaufenden Teilen 10 und 11 der Teilringe 6 und 7 eintreten. Außerdem sind die Teilringe 6 und 7 mit Befestigungsbohrungen 12 und 13 versehen, durch die nicht dargestellte Befestigungsschrauben hindurchgesteckt sind und so für einen sicheren Zusammenhalt der Gesamtlagerbaueinheit sorgen. Zu den beiden Axiallagem 2 und 3 gehören Lagemadeln 17 und 18, die in zugehörigen Käfigen 19 und 20 geführt sind. Die nicht bezeichneten Laufbahnen der beiden Axiallager 2 und 3 werden einerseits von den einander gegenüberliegenden Stirnseiten des Außenringes 4 vom Radiallager 1 und andererseits von den beiden Laufscheiben 8 und 9 gebildet, die einstückig mit dem axial verlaufenden Teil 10 bzw. 11 verbunden sind und die so in der bereits beschriebenen Weise die L-förmig ausgebildeten Teilringe 6 und 7 bilden, die wiederum den Innenring 5 ergeben. Die Lagerachse für das Radiallager 1 und die beidseitig angeordneten Axiallager 2 und 3 ist mit 16 bezeichnet. Die in Figur 1 dargestellte Lagerbaueinheit wird vom Hersteller in der Regel als komplette Baueinheit geliefert, d. h. mit eingestellter Vorspannung. Die Vorspannung der Lager 1, 2 und 3 wird durch eine Feinstbearbeitung der beteiligten Bauteile realisiert, d. h. die Vorspannung des Radiallagers 1 wird durch den eingestellten Abstand zwischen Laufbahn des Innenringes 5 und Laufbahn des Außenringes 4 bzw. durch zusortierte Zylinderrollen 15 eingestellt. Die Vorspannnung der beiden Axiallager 2 und 3 hingegen wird durch die axiale Dicke von Außenring 4 und den beiden Laufscheiben 8 und 9 bzw. durch zusortierte Lagernadeln 17 und 18 eingestellt. Es liegt auf der Hand, dass eine derart ausgestaltete erfindungsgemäße Lagerbaueinheit aufgrund ihrer Konstruktion eine sehr große Kippsteifigkeit aufweist. Die Ansicht lässt auch erkennen, dass es zweckmäßig erscheint, bei der Fertigung zunächst die beiden Teilringe 6 und 7 als Komplettbauteil zu fertigen und anschließend voneinander zu trennen. Auf diese Weise sind unerwünschte Differenzen zwischen den Befestigungsbohrungen 12 und 13 und den beiden Teilinnenlaufbahnen mit Sicherheit vermieden.

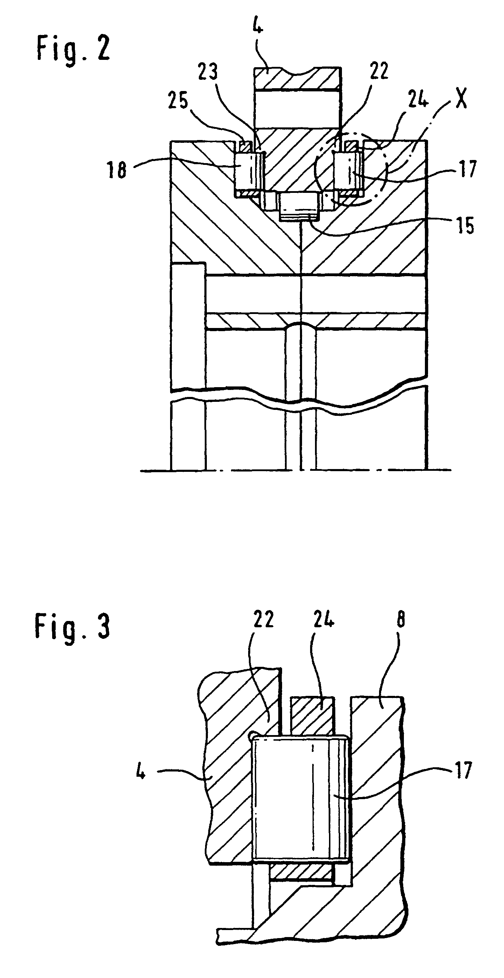

Die in den Figuren 2 und 3 gezeigte Lageranordnung unterscheidet sich von der in Figur 1 dargestellten dadurch, dass die Lagernadeln 17 und 18 der beiden Axiallager 2 und 3 durch je einen Bord 22 und 23 an der Stirnseite des Außenringes 4 geführt sind. Dies bedeutet, deren als Scheibenkäfige 24, 25 sind nicht mehr für die Führung der Lagernadeln 17 und 18 zuständig, sondern sind nur noch für deren Trennung verantwortlich.

Natürlich ist es im Gegensatz zur dargestellten Weise auch möglich, die beiden Borde 22, 23 nicht im Außenring 4, sondern jeweils an den Laufscheiben 8 und 9 anzuordnen.

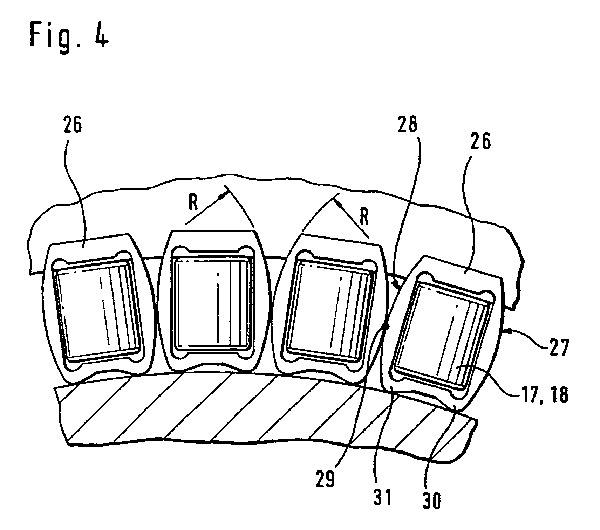

In Figur 4 schließlich sind die Lagernadeln bzw. die Wälzkörper 17 und 18 in Segmenten 26 untergebracht, die an ihrer in Umfangsrichtung gegenüberliegender Seite je eine durch den Radius R definierte bogenförmige Begrenzungslinie 27 und 28 aufweisen, so dass bei deren Aneinanderliegen zwischen zwei benachbarten Segmenten 26 der Berührungspunkt 29 gebildet ist. Außerdem sind die Segmente 26 an ihrer radial innenliegenden Seite mit zwei in Umfangsrichtung voneinander beabstandeten Erhebungen 30 und 31 versehen, die an den Umgebungsbauteilen 10, 11 anliegen. Der Vorteil dieser Segmente 26 liegt darin, dass sie für in radialer Richtung unterschiedlich große Axiallager 2 und 3 einsetzbar sind. Darunter ist zu verstehen, dass die Laufscheiben 8 und 9 der Axiallager 2 und 3 einen unterschiedlichen Radius R aufweisen. Vergrößert sich dieser, d. h. werden die Laufscheiben 8 und 9 in Umfangsrichtung größer, so können dennoch die in der Abmessung gleichen Segmente 26 einschließlich Wälzkörper 17, 18 eingesetzt werden, wobei sich lediglich der Berührungspunkt 29 zwischen zwei benachbarten Segmenten 26 in radialer Richtung nach außen verschiebt.

### Bezugszeichen

- 1: Radiallager
- 2: Axiallager
- 3: Axiallager
- 4: Außenring
- 5: Innenring
- 6: Teilring
- 7: Teilring
- 8: Laufscheibe
- 9: Laufscheibe
- 10: axialer Teil
- 11: axialer Teil
- 12: Befestigungsbohrung
- 13: Befestigungsbohrung
- 14: Trennebene
- 15: Zylinderrolle
- 16: Lagerachse
- 17: Lagemadel
- 18: Lagemadel
- 19: Käfig
- 20: Käfig
- 21: Befestigungsbohrung
- 22: Bord
- 23: Bord
- 24: Scheibenkäfig
- 25: Scheibenkäfig
- 26: Segment
- 27: Begrenzungslinie
- 28: Begrenzungslinie
- 29: Berührungspunkt
- 30: Erhebung
- 31: Erhebung
- R: Begrenzungsradius

## Patentansprüche

1. Radial-Axial-Wälzlager, mit einem Innenring (5), zu dem koaxial ein Außenring (4) angeordnet ist, zwischen denen zur Aufnahme von radialen Kräften zylindrische Wälzkörper (15) abrollen und mit beidseitig zur Aufnahme von axialen Kräften angeordneten, in Käfigen (19, 20, 24, 25) aufgenommenen zylindrischen Wälzkörpem (17, 18), deren Laufbahnen einerseits von den Stirnflächen des Außenringes (4) und andererseits von je einer Laufscheibe (8, 9) gebildet sind, wobei der Innenring (5) aus zwei Teilringen (6, 7) gebildet ist, die einstückig mit den Laufscheiben (8, 9) verbunden sind, **dadurch gekennzeichnet, dass** eine Trennebene (14) zwischen den Teilringen (6, 7) in den Laufbahnbereich der zylindrischen Wälzkörper des Radiallagers (1) gelegt ist.

2. Radial-Axial-Wälzlager nach Anspruch 1, **dadurch gekennzeichnet, dass** die Trennebene (14) in das Zentrum des Laufbahnbereichs des Radiallagers (1) gelegt ist.

3. Radial-Axial-Wälzlager nach Anspruch 1, **dadurch gekennzeichnet, dass** der Innenring (5) zunächst als einstückiges Bauteil bearbeitet und nach seiner Fertigstellung in die beiden Teilringe (6, 7) gesprengt ist.

4. Radial-Axial-Wälzlager nach Anspruch 1, **dadurch gekennzeichnet, dass** die Teilringe (6, 7) durch Befestigungsschrauben aneinander gehalten sind.

5. Radial-Axial-Wälzlager nach Anspruch 1, **dadurch gekennzeichnet, dass** die zylindrischen Wälzkörper (17, 18) der Axiallager (2, 3) durch je einen Bord (22, 23) geführt sind, der entweder am Außenring (4) oder an den Laufscheiben (8, 9) angeordnet ist.

6. Radial-Axial-Wälzlager nach Anspruch 5, **dadurch gekennzeichnet, dass** der Käfig des Axiallagers (2, 3) aus einzelnen, je einen zylindrischen Wälzkörper (17, 18) aufnehmenden, in Umfangsrichtung aneinanderstoßenden Segmenten (26) zusammengesetzt ist.

7. Radial-Axial-Wälzlager nach Anspruch 6, **dadurch gekennzeichnet, dass** die Segmente (26) wenigstens in einem Teilbereich ihrer radialen Ausdehnung je eine in Umfangsrichtung gegenüberliegende bogenförmige Begrenzungslinie (27, 28) derart aufweisen, dass ein Berührungspunkt (29) zwischen zwei benachbarten Segmenten (26) gebildet ist, der im Bereich zwischen Teilkreislinie und Bord (22, 23) angeordnet ist.

8. Radial-Axial-Wälzlager nach Anspruch 6, **dadurch gekennzeichnet, dass** zwischen zwei benachbarten Segmenten (26) ein Federmittel angeordnet ist.

9. Radial-Axial-Wälzlager nach Anspruch 6, **dadurch gekennzeichnet, dass** die Segmente (26) an ihrer radial innenliegenden Seite zwei in Umfangsrichtung voneinander beabstandete Erhebungen (30, 31) aufweisen.

## Claims

1. Radial-axial roller bearing, having an inner ring (5), coaxially with which an outer ring (4) is disposed, between which cylindrical rolling bodies (15) roll in order to absorb radial forces, and having cylindrical rolling bodies (17, 18) disposed in cages (19, 20, 24, 25) on both sides to absorb lateral forces, the cracks of which are formed on one side by the end faces of the outer ring (4) and on the other side by a runner plate (8, 9) in each case, the inner ring (5) being formed from two part-rings (6, 7), which are integrally connected to the runner plates (8, 9), **characterized in that** a separating plane (14) is placed between the part-rings (6, 7) in the track region of the cylindrical rolling bodies of the radial bearing (1).

2. Radial-axial roller bearing as claimed in Claim 1, **characterized in that** the separating plane (14) is placed in the centre of the track region of the radial bearing (1).

3. Radial-axial roller bearing according to Claim 1, **characterized in that** the inner ring (5) is initially machined as a one-piece component and is split into the two part-rings (6, 7) after its production.

4. Radial-axial roller bearing according to Claim 1, **characterized in that** the part-rings (6, 7) are retained one upon the other by fixing screws.

5. Radial-axial roller bearing according to Claim 1, **characterized in that** the cylindrical rolling bodies (17, 18) of the axial bearings (2, 3) are each guided by a rim (22, 23) which is disposed either on the outer ring (4) or on the runner plates (8, 9).

6. Radial-axial roller bearing according to Claim 5, **characterized in that** the cage of the axial bearings (2, 3) is composed of individual segments (26) abutting one another in the peripheral direction and each receiving a cylindrical rolling body (17, 18).

7. Radial-axial roller bearing according to Claim 6, **characterized in that** the segments (26) each have in at least one part-region of their radial extent an arcuate line of limitation (27, 28) lying opposite one another in the peripheral direction in a manner such that a contact point (29) is formed between two neighbouring segments (26) and is disposed in the region between the part-circular line and the rim (22, 23).

8. Radial-axial roller bearing according to Claim 6, **characterized in that** a spring means is disposed between two neighbouring segments (26).

9. Radial-axial roller bearing according to Claim 6, **characterized in that** the segments (26) each comprise, on their radially inward sides, two protuberances (30, 31) which are mutually spaced in the peripheral direction.

## Revendications

1. Roulement axial-radial comprenant une bague intérieure (5), une bague extérieure (4) disposée de manière coaxiale par rapport à celle-ci, entre lesquelles roulent des organes de roulement cylindriques (15) pour absorber les forces radiales et comprenant des organes de roulement cylindriques (17, 18) logés dans des cages (19, 20, 24, 25), disposés des deux côtés pour absorber les forces axiales et dont les pistes de roulement sont formées d'un côté par les faces frontales de la bague extérieure (4) et de l'autre côté à chaque fois par un disque de roulement (8, 9), la bague intérieure (5) étant réalisée sous la forme de deux bagues partielles (6, 7) qui sont reliées d'une seule pièce avec les disques de roulement (8, 9), **caractérisé en ce qu'**il existe un plan de séparation (14) entre les bagues partielles (6, 7) dans la zone de la piste de roulement des organes de roulement cylindriques du roulement radial (1).

2. Roulement axial-radial selon la revendication 1, **caractérisé en ce que** le plan de séparation (14) se trouve au centre de la zone de la piste de roulement du roulement radial (1).

3. Roulement axial-radial selon la revendication 1, **caractérisé en ce que** la bague intérieure (5) est tout d'abord usinée sous la forme d'un composant monobloc et elle est fendue en les deux bagues partielles (6, 7) après être terminée.

4. Roulement axial-radial selon la revendication 1, **caractérisé en ce que** les bagues partielles (6, 7) sont maintenues entre elles par des vis de fixation.

5. Roulement axial-radial selon la revendication 1, **caractérisé en ce que** les organes de roulement cylindriques (17, 18) du roulement axial (2, 3) sont guidés par un bord (22, 23) qui est disposé soit sur la bague extérieure (4), soit sur les disques de roulement (8, 9).

6. Roulement axial-radial selon la revendication 5, **caractérisé en ce que** la cage du roulement axial (2, 3) est composée de segments (26) individuels, recevant chacun un organe de roulement cylindrique (17, 18) et contigus dans le sens du pourtour.

7. Roulement axial-radial selon la revendication 6, **caractérisé en ce que** les segments (26) présentent chacun au moins dans une zone partielle de leur extension radiale, une ligne de délimitation (27, 28) courbée opposée dans le sens du pourtour de telle sorte qu'il se forme entre deux segments (26) voisins un point de contact (29) qui est disposé dans la zone entre la circonférence partielle et le bord (22, 23).

8. Roulement axial-radial selon la revendication 6, **caractérisé en ce qu'**un moyen ressort est disposé entre deux segments (26) voisins.

9. Roulement axial-radial selon la revendication 6, **caractérisé en ce que** les segments (26) présentent sur leur côté intérieur dans le sens radial deux bossages (30, 31) espacés l'un de l'autre dans le sens du pourtour.
